# EUROPÄISCHE PATENTSCHRIFT

(11) **EP 2 895 775 B1**
(45) Veröffentlichungstag und Bekanntmachung des Hinweises auf die Patenterteilung: **09.08.2017**
(21) Anmeldenummer: 13762062.1
(22) Anmeldetag: 27.08.2013
(51) Int. Cl.: F16K 1/44

(54) **VENTILVORRICHTUNG, ANORDNUNG MIT VENTILVORRICHTUNG UND VERFAHREN ZUM BETRIEB EINER ANORDNUNG**
VALVE APPARATUS, ARRANGEMENT WITH VALVE APPARATUS AND METHOD FOR OPERATING AN ARRANGEMENT
DISPOSITIF DE VANNE, SYSTÈME COMPORTANT UN DISPOSITIF DE VANNE, ET PROCÉDÉ PERMETTANT DE FAIRE FONCTIONNER UN SYSTÈME

(30) Priorität: 11.09.2012 CH 16502012
(43) Veröffentlichungstag der Anmeldung: 22.07.2015
(73) Patentinhaber: GEA Aseptomag AG, 3422 Kirchberg (CH)
(72) Erfinder: LANGENEGGER, Urs, 3076 Worb (CH)
(74) Vertreter: Eisenführ Speiser
(86) Internationale Anmeldenummer: PCT/EP2013/002575
(87) Internationale Veröffentlichungsnummer: WO 2014/040700

(56) Entgegenhaltungen:
- EP-A2- 0 928 915
- WO-A1-01/71228
- DE-U1- 20 317 882
- DE-U1-202011 004 300
- JP-A- 2009 127 761
- US-A1- 2010 072 411

## Beschreibung

Die Erfindung betrifft eine Ventilvorrichtung nach dem Oberbegriff des Anspruchs 1, eine Anordnung mit einer Ventilvorrichtung nach Anspruch 10 und ein Verfahren zum Betreiben einer Anordnung mit einer Ventilvorrichtung nach Anspruch 14.

### STAND DER TECHNIK

Für viele Lebensmittel sind Ursprungsland der Rohprodukte und Absatzmärkte durch weite Entfernungen voneinander getrennt. Beispielsweise werden Früchte in Südamerika geerntet und zu einem flüssigen Lebensmittelgrundstoff weiterverarbeitet, welcher bis nach Europa transportiert werden muss. Der Transport erfolgt dabei beispielsweise in Tankcontainern. Ein solcher Tankcontainer besitzt eine Rahmenkonstruktion, in der ein Behälter befestigt ist. Der Tankcontainer kann dann auf Containerschiffen über See transportiert und am Zielhafen auf erdgebundene Transportmittel umgeladen und auf Schiene und Straße transportiert werden. Die Rahmenkonstruktion ist dabei für die Ver- und Umladevorgänge notwendig. Am Behälter ist eine Ventilvorrichtung vorgesehen, mit der der Lebensmittelgrundstoff in den Behälter hineingebracht und am Zielort wieder entnommen werden kann.

Einige flüssige Lebensmittelgrundstoffe stellen eine große Herausforderung für den Transport dar. Beispielsweise wird der Grundstoff für frischen und weitgehend unbehandelten Orangensaft schon bei geringen Keimbelastungen unbrauchbar. Die Umweltbedingungen während des Seeweges und die Zeitdauer zwischen Be- und Entladen verhinderten durch den Keimeintrag bisher den wirtschaftlich sinnvollen Transport eines solchen Orangensaftes.

Einige Schwachstellen der Tankcontainer wurden als Problempunkte identifiziert, darunter das so genannte Mannloch und Einrichtungen zur Probeentnahme.

Eine weitere Schwachstelle für den Transport besteht in der Ventilvorrichtung für den Behälter. Die Ventilvorrichtung umfasst ein Schließelement mit einer Dichtungsanordnung, wobei in geschlossener Stellung die Dichtungsanordnung mit einem Sitz in Kontakt steht und die Fluidverbindung zwischen den Anschlüssen der Ventilvorrichtung unterbricht. Im Bereich der Dichtungsanordnung besteht die Gefahr von Verunreinigung durch Keime, gerade bei den oben erwähnten sehr langen Transportwegen und den dabei durchzuführenden Transportvorgängen.

Als Folge wurden bisher einige Lebensmittelgrundstoffe nicht mittels solcher Tankcontainer über die langen Distanzen transportiert, da die Verunreinigung mit Keimen trotz sorgfältiger Bedienung und Behandlung mit sterilisierenden Fluiden, beispielsweise mit heißem Wasserdampf, nicht verhindert werden konnte.

WO01/71228 offenbart eine Ventilvorrichtung nach dem Oberbegriff des Anspruchs 1.

Es ist daher Aufgabe der Erfindung, eine Ventilvorrichtung, eine Anordnung mit Ventilvorrichtung und ein Verfahren zum Betrieb vorzustellen, wobei der Transport unter aseptischen Bedingungen ermöglicht werden soll.

### ZUSAMMENFASSUNG DER ERFINDUNG

Diese Aufgabe wird gelöst durch eine Ventilvorrichtung mit den Merkmalen des Anspruch 1, sowie einem Verfahren zum Betrieb einer Ventilvorrichtung mit den Merkmalen des Anspruchs 11. Die weiteren Ansprüche geben vorteilhafte Weiterbildungen der Ventilvorrichtung, der Anordnung und des Verfahrens an.

Die Ventilvorrichtung umfasst ein Schließelement, zwei Dichtungsanordnungen und ein Reservoir. In einer Schließstellung der Ventilvorrichtung umschließen Schließelement und Dichtungsanordnungen zusammen mit dem Gehäuse oder einem zu dem Gehäuse gehörenden und gehäuseseitig angeordneten Bauteil eine Kammer, welche mit einem Reservoir verbindbar ist. Das Reservoir ist zur Aufnahme eines bakteriziden Fluides gestaltet. Kammer und Reservoir sind dabei zur Ausbildung einer in der Kammer befindlichen Keimbarriere angepasst. Diese Anpassung umfasst beispielsweise die Wahl der Rauminhalte von Kammer und Reservoir. Diese Maßnahmen erlauben, in der Kammer bakterizides Fluid einzubringen und dadurch eine Keimbarriere auszubilden. Reservoir und Kammer ermöglichen es, diese Keimbarriere frei von Luftblasen zu schaffen und über die gesamte Transportdauer hinweg auszubilden und aufrechtzuerhalten. Keimeintrag in das transportierte Füllgut wird somit verhindert.

Insbesondere die folgend beschriebenen vorteilhaften Weiterbildungen werden in den abhängigen Ansprüchen vorgestellt.

Eine kostengünstige Ausführung der Dichtungsanordnungen umfasst je eine schließelementseitige Aufnahme, in die ein Dichtungsring, beispielsweise ein Elastomerring, eingesetzt ist.

Die erste Dichtungsanordnung wird gemäß der Erfindung dem ersten Anschluss zugeordnet und als Radialdichtung ausgeführt. Dies ermöglicht, das Schließelement in eine Teilhubstellung zu bewegen und insbesondere die zweite Dichtungsanordnung von ihrem Sitz zu trennen. Hierdurch können die Oberflächen, welche die Kammer begrenzen, gereinigt werden, während der Behälter durch die erste Dichtungsanordnung von der Umgebung getrennt bleibt. Dementsprechend sieht die Erfindung vor, eine Verstelleinrichtung vorzusehen und derart auszugestalten, dass sie das Schließelement nicht nur zwischen Offenstellung und Schließstellung bewegen sondern auch in eine Teilhubstellung verbringen kann, in welcher die erste Dichtungsanordnung in dichtendem Kontakt mit dem Sitz verbleibt während die zweite Dichtungsanordnung den ihr zugeordneten Sitz nicht berührt. Die besagten Vorteile der Teilhubstellung lassen sich so auf kostengünstige Bauweise ausnutzen. Insbesondere kann die Verstelleinrichtung nach Anspruch 3 eine Hauptverstelleinrichtung und eine Nebenverstelleinrichtung umfassen, wobei die Nebenverstelleinrichtung die Teilhubstellung des Schließelements bewirkt. Diese Bauweise der Verstelleinrichtung ist einfach und kostengünstig, da die Funktionen getrennt sind und somit eine einfache Ansteuerung ausreicht. Beispielsweise ist keine aufwändige Wegemessung erforderlich. Ebenfalls kostengünstig und einfach ist die Ausgestaltung von Haupt- und Nebenverstelleinrichtung nach Anspruch 6 als druckmittelbeaufschlagte Verstelleinrichtungen.

Gemäß der Erfindung ist vorgesehen, dass die zweite Dichtungsanordnung axial oder halbaxial ausgeführt ist. Auf diese Weise bildet sie eine Wegbegrenzung, insbesondere einen Anschlag, der die Schließstellung des Schließelements festlegt. Dies erlaubt auf technisch einfachem Wege eine definierte druckbelastete Schließstellung.

Nach Anspruch 5 ist ein Balg vorgesehen, der eine zwischen Verstelleinrichtung und Schließelement vorgesehene Ventilstange umgibt. Dies verhindert den Eintrag von Keimen über die Ventilstange. Der Balg kann dabei einen durchgehend konstanten Durchmesser aufweisen. Er kann auch einen Durchmessersprung besitzen, der insbesondere so gestaltet ist, dass sich eine Stirnfläche ergibt, die eine Druckausgleichsfunktion besitzt. Hierdurch werden so genannte Druckschläge verhindert, die sich ergeben, da die Ventilvorrichtung bei Befüllen und Entleeren des Behälters zwangsläufig in unterschiedliche Flussrichtungen des Gutes betrieben wird.

Die Weiterbildung nach Anspruch 6 sieht ein Fluidventil zwischen dem Reservoir und der Kammer vor. Dieses erleichtert das Dosieren des bakteriziden Fluides. Beispielsweise kann das Reservoir unabhängig von der Kammer befüllt werden.

Die Vorteile der Ventilvorrichtung kommen insbesondere in einer Anordnung nach Anspruch 7 zur Geltung, da sich die Ausbildbarkeit einer Keimbarriere sehr vorteilhaft auf die Lagerbarkeit von Füllgut in einem Behälter der Anordnung auswirkt.

Die abhängigen Ansprüche 8-10 beziehen sich auf Weiterbildungen der Anordnung mit der vorgenannten Ventilvorrichtung.

Anspruch 8 sieht vor, eine Behälteröffnung und den ersten Anschluss mittels einer aseptischen Schraubflanschverbindung miteinander zu verbinden. Dies erleichtert die Wartung und den Austausch der Ventilvorrichtung und verhindert gleichzeitig den Eintrag von Keimen an dieser Stelle.

Nach Anspruch 9 ist der Behälter in einem Tankcontainer angeordnet, wodurch sein Transport durch Stapelbarkeit und seine Umladevorgänge vereinfacht werden. Die Vorteile der in der Ventilvorrichtung ausbildbaren Keimbarriere kommen auf diese Weise besonders zur Geltung.

Eine besonders sichere Befüllung der Kammer mit bakterizidem Fluid ergibt sich, wenn das Reservoir gemäß Anspruch 10 an der auf die Schwerkraftrichtung bezogen höchsten Stelle der Kammer in diese mündet.

Das Verfahren sieht vor, nach Befüllen eines in einer Anordnung mit Ventilvorrichtung vorgesehenen Behälters mit dem zu transportierendem Füllgut die vorgenannte Kammer mit bakterizidem Fluid zu füllen und so die Keimbarriere zu schaffen, die den anschließenden Transport über lange Strecken und Zeitdauern hinweg ohne Keimeintrag in das Füllgut ermöglicht.

Die Weiterbildung des Verfahrens nach Anspruch 12 verbessert die Güte der Keimbarriere, indem das Befüllen der Kammer mit bakterizidem Fluid umfasst, dass das Schließelement derart in Teilhubstellung gebracht wird, dass Luftblasen aus dem Fluid entweichen können.

Die Weiterbildung nach Anspruch 13 verbessert den Entnahmeprozess. Die Keimbarriere wird nach dem Transport beseitigt, in dem das Schließelement in Teilhubstellung gebracht und ein Sterilisationsprozess durchgeführt wird. Hierdurch wird ein Vermischen des Fluides mit dem im Behälter transportierten Füllgut verhindert und gleichzeitig der Eintrag von Keimen während des Entnahmevorgangs vermieden.

### KURZBESCHREIBUNG DER ZEICHNUNGEN

Anhand eines Ausführungsbeispiels und seiner Weiterbildungen soll die Erfindung näher erläutert werden. Es zeigen:
Fig. 1: einen Schnitt durch einen Teil einer Anordnung mit Behälter und Ventilvorrichtung;
Fig. 2a bis 2c: Schnitte in vergrößerter Darstellung durch den Bereich des Schließelements und der Kammer der Ventilvorrichtung gemäß Figur 1. Dabei zeigen wie folgt:

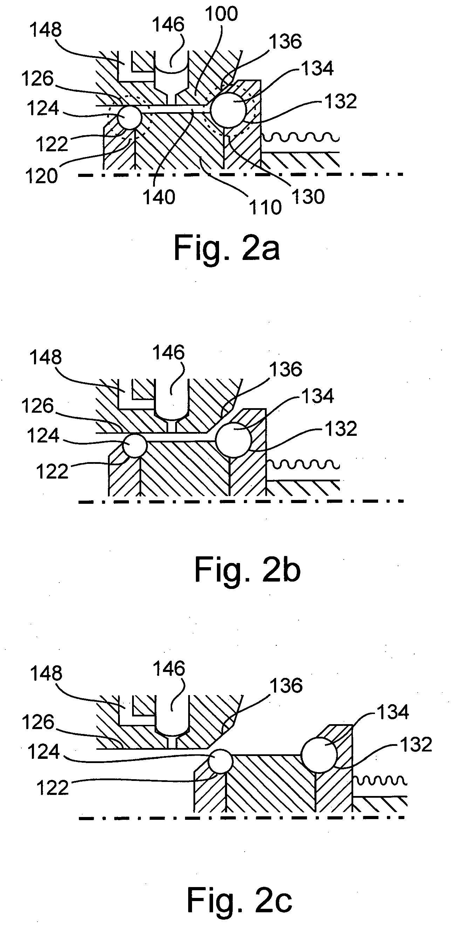

   Fig. 2a) das Schließelement in Schließstellung,
   Fig. 2b) das Schließelement in Teilhubstellung,
   Fig. 2c) das Schließelement in Offenstellung.

### DETAILLIERTE BESCHREIBUNG

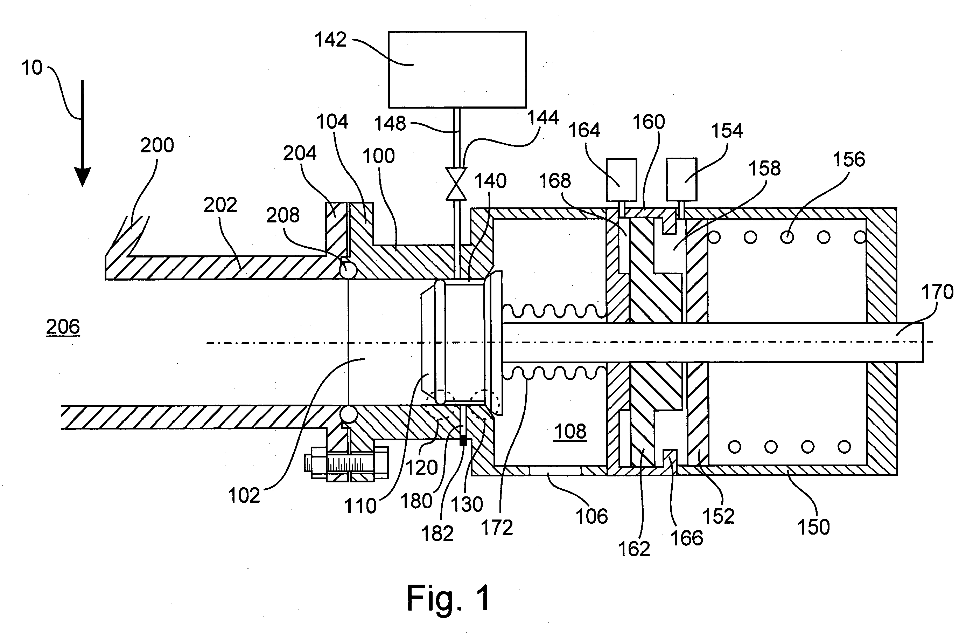

Ein Schnitt durch eine Ventilvorrichtung innerhalb einer Anordnung mit Behälter ist in Fig. 1 gezeigt.

Ein Behälter 200, welcher in einer Rahmenkonstruktion zur Ausbildung eines Tankcontainers vorgesehen sein kann, umfasst einen Stutzen 202 mit einem behälterseitigen Flansch 204. Durch diesen Stutzen ist ein Innenraum 206 des Behälters 200 befüllbar.

Mit dem behälterseitigen Flansch 204 des Stutzens 202 ist eine Ventilvorrichtung verbunden. Dargestellt ist eine Schraubflanschverbindung, wobei ein Ventilflansch 104 und der behälterseitige Flansch 204 derart gestaltet sind, dass eine aseptische Schraubflanschverbindung entsteht. Diese ist insbesondere gekennzeichnet durch eine Minimierung von Toträumen sowie Ecken und Kanten im Bereich einer Flanschdichtung 208. Hierzu ist die Flanschdichtung 208 in den Flanschen 104 und 204 über weite Teile von bogenförmigen Ausnehmungen umschlossen. Um Vorteile der Standardisierung auszunutzen, kann die Flanschverbindung nach DIN 11864 ausgeführt sein.

Der Ventilflansch 104 ist an einem Gehäuse 100 der Ventilvorrichtung angeordnet und umgibt einen ersten Anschluss 102, der wie in der Fig. 1 dargestellt mit dem Behälter 200 verbindbar ist.

Alternativ zur aseptischen Schraubflanschverbindung kann eine Schweißverbindung zwischen Behälter 200 und dem Gehäuse 100 der Ventilvorrichtung vorgesehen sein. Eine solche Verbindung bietet den zusätzlichen Vorteil, dass Keimeintrag fast vollkommen ausgeschlossen und die Verbindung vollständig reinigbar ist. Zudem muss eine solche Verbindung nicht gewartet werden.

Im Gehäuse 100 der Ventilvorrichtung befinden sich ein zweiter Anschluss 106 und ein Schließelement 110, welches in eine Offenstellung verbringbar ist, in der eine Fluidverbindung zwischen dem ersten Anschluss 102 und dem zweiten Anschluss 106 hergestellt ist, und welches in eine Schließstellung verbringbar ist, in der erster und zweiter Anschluss 102, 106 fluiddicht voneinander getrennt sind. Dies erlaubt das Befüllen des Behälters 200 mit Füllgut in der Offenstellung und den Transport des Behälters 200 in Schließstellung des Schließelement 110 und damit der Ventilvorrichtung.

Am Schließelement 110 sind eine erste Dichtungsanordnung 120 und eine zweite Dichtungsanordnung 130 vorgesehen. Diese wirken mit einem gehäuseseitig vorgesehenen ersten Sitz 126 und einem ebensolchen zweiten Sitz 136 zusammen. Jeder dieser Sitze 126, 136 kann als Teil des Gehäuses 100 selbst oder als ein in das Gehäuse 100 eingesetztes und mit diesem beispielsweise stoffschlüssig verbundenen Element ausgestaltet sein.

Die erste Dichtungsanordnung 120 ist dem ersten Anschluss 102 zugewandt. In Offenstellung des Schließelements 110 bedeutet dies, dass ein durch den ersten Anschluss 102 hindurchtretendes Fluid zunächst mit der ersten Dichtungsanordnung 120 und dann mit der zweiten Dichtungsanordnung 130 in Kontakt kommt.

Eine konstruktiv einfache und daher kostengünstige Gestaltung der Dichtungsanordnungen 120, 130 sieht vor, wenigstens eine oder beide mit einem ersten Dichtungsring 124 und einem zweiten Dichtungsring 134 auszugestalten, die in am Schließelement 110 ausgeformten Aufnahmen 122 und 132 angeordnet sind.

In der Schließstellung des Schließelements 110 stehen beide Dichtungsanordnungen 120, 130 mit dem jeweils zugeordneten Sitz 126, 136 in dichtendem Kontakt. Von den Dichtungsanordnungen 120, 130, dem Schließelement 110 und dem Gehäuse 100 ist eine Kammer 140 räumlich begrenzt. Das Gehäuse 100 kann auch hier mehrteilig aufgebaut sein, beispielsweise kann ein ringförmiges Bauteil eingesetzt sein und die Kammer 140 als ein Teil des Gehäuses 100 begrenzen. Solch ein Bauteil kann vorteilhaft mit dem Gehäuse 100 stoffschlüssig verbunden sein, um Hohlräume zu vermeiden, in denen Keime festsitzen können.

Die Ventilvorrichtung weist ein mit der Kammer 140 verbindbares Reservoir 142 zur Aufnahme eines bakteriziden Fluids auf, so dass die Kammer 140 in der Schließstellung des Schließelements 110 zur Ausbildung einer Keimbarriere mit dem einem bakteriziden Fluid befüllbar ist.

Dieses Reservoir 142 kann innerhalb des Gehäuses 100 der Ventilvorrichtung oder innerhalb eines angeflanschten Teils ausgeformt sein. Alternativ kann es ein eigenständiges Bauteil sein, welches über eine Fluidzuleitung 148 mit der Kammer 140 verbindbar ist. Das Fassungsvermögen richtet sich dabei nach dem Rauminhalt der Kammer 140. Vorteilhaft verbleibt das Reservoir 142 während des Transport an der Ventilvorrichtung und in Verbindung mit der Kammer 140, so dass bakterizides Fluid in die Kammer 140 nachströmen kann. Hiermit wird sichergestellt, dass die Keimbarriere über lange Zeiträume erhalten bleibt, denn selbst kleinste Undichtigkeiten einer der Dichtungsanordnungen 120, 130 führen zu Verlusten von bakterizidem Fluid, die ausgeglichen werden müssen. Die Verbindung zwischen Reservoir 142 und Kammer 140 kann hierbei dauerhaft oder über ein Fluidventil 144 getaktet sein. Das Fluidventil 144 bietet noch zusätzliche Vorteile für die Ausgestaltungen des Verfahrens, welche später beschrieben werden.

Das Reservoir 142 und die Kammer 140 sind zur Ausbildung der Keimbarriere angepasst. Beispielsweise kann der Rauminhalt der Kammer so gewählt sein, dass in der Kammer eine zur sicheren Unterdrückung von Keimen ausreichende Menge bakteriziden Fluids vorliegt. Der Rauminhalt des Reservoirs kann so bestimmt sein, dass aus der Kammer verdampfendes oder leckendes Fluid durch Nachlauf aus dem Reservoir 142 ausgeglichen wird.

Das Reservoir 142 kann druckbeaufschlagt ausgeführt sein. Alternativ oder zusätzlich kann ein Mittel vorgesehen sein, mit welchem das Fluid unter Druck gestellt wird. Solch ein Mittel kann ein Gewicht sein, welches das Fluid unter Druck setzt. In diesem Fall ist vorteilhaft, das Fluidventil 144 vorzusehen und zum Absperren des unter Druck stehenden Fluids zu nutzen. Durch die Druckbeaufschlagung des Reservoirs 142 kann dieses an beliebiger Stelle in die Kammer 140 münden. Vorteilhaft ist es dann, an der auf die Schwerkraftrichtung 10 bezogen höchsten Stelle der Kammer 140 einen Auslass, vorzugsweise mit Ventil, vorzusehen, über welches Gas aus der Kammer und dem bakteriziden Fluid entweichen kann.

Innerhalb der Anordnung kann das Reservoir 142 vorteilhaft so angeordnet sein, dass es an der auf die Schwerkraftrichtung 10 bezogen höchsten Stelle der Kammer 140 in dieses mündet. Hierdurch wird die vollständige Füllung der Kammer 140 mit bakterizidem Fluid zur Ausbildung einer Keimbarriere vereinfacht. Zugleich ist es auf diese Weise besonders einfach, den kammerseitigen Druck auf die erste Dichtungsanordnung 120 niedriger als den behälterseitigen Druck zu halten. Zudem können Luftblasen aus der Kammer 140 in das Reservoir 142 entweichen.

Zum Entfernen der Keimbarriere kann ein verschließbarer Ablauf 180 vorgesehen sein, der vorteilhaft am auf die Schwerkraftrichtung 10 bezogen tiefsten Punkt der Kammer 140 ansetzt und durch ein geeignetes Verschließmittel 182 verschließbar ist.

Das Schließelement 110 ist mit einer Verstelleinrichtung verbunden. Diese ist so gestaltet, dass sie eine Verstellung des Schließelements 110 zwischen seiner Offenstellung und seiner Schließstellung bewirkt.

Vorteilhaft kann die Verstelleinrichtung so gestaltet sein, dass sie zusätzlich eine Teilhubstellung bewirkt, wobei in der Teilhubstellung die erste Dichtungsanordnung 120 in dichtendem Kontakt mit dem ersten Sitz 126 verbleibt während die zweite Dichtungsanordnung 130 den ihr zugeordneten zweiten Sitz 136 nicht berührt. Weiterhin ist es dann vorteilhaft, die erste Dichtungsanordnung 120, die dem ersten Anschluss 102 zugeordnet ist, als Radialdichtung auszuführen. Durch diese Gestaltungsmaßnahmen ermöglicht die Teilhubstellung, dass die Fluidverbindung zwischen erstem und zweitem Anschluss 102, 106 getrennt bleibt, während die Kammer 140 zum zweiten Anschluss 106 hin geöffnet wird. Auf diese Weise kann die Kammer 140 entleert oder eine darin befindliche Flüssigkeit von Luftblasen befreit werden.

Im dargestellten Beispiel ist die Verstelleinrichtung mit einem Druckmittel beaufschlagbar, wobei sie bevorzugt pneumatisch wirkend ausgestaltet ist. Zum Ermöglichen des Teilhubes ist zusätzlich zu einer Hauptverstelleinrichtung 150 eine Nebenverstelleinrichtung 160 vorgesehen.

Die Hauptverstelleinrichtung 150, die das Schließelement 110 zwischen seiner Offenstellung und seiner Schließstellung bewegt, umfasst einen Hauptkolben 152. Dieser wird, wenn mittels einer Hauptdruckmittelversorgung 154 ein Hauptbetätigungsvolumen 158 mit unter Druck stehenden Pneumatikfluid gefüllt wird, gegen eine Feder 156 bewegt, die eine Rückstellkraft bewirkt. Der Hauptkolben 152 ist fest mit einer Ventilstange 170 verbunden, die wiederum mit dem Schließelement 110 verbunden ist. Die Bewegung des Hauptkolbens 152 wird durch die festen Verbindungen auf das Schließelement 110 übertragen und dieses wird zwischen seiner Schließstellung und seiner Offenstellung bewegt.

Auf der Ventilstange 170 gleitet ein Nebenkolben 162. Mittels einer Nebendruckmittelversorgung 164 ist ein Nebenbetätigungsvolumen 168 mit unter Druck stehendem Pneumatikfluid befüllbar. Der Nebenkolben 162 ist so gestaltet, dass er zunächst mit dem Hauptkolben 152 in Kontakt gelangt und diesen solange verschiebt, bis ein Teil des Nebenkolbens 162 einen Anschlag 166 berührt und hierdurch die Bewegung gegrenzt wird. Die Feder 156 bewirkt auf diese Weise sowohl für den Teilhub als auch die Bewegung zwischen Schließstellung und Offenstellung die Rückstellkraft. Es können mehrere Federn parallel und/oder in reihe geschaltet sein, um die gewünschte Rückstellkraft bereitzustellen.

Vorteilhaft kann die zweite Dichtungsanordnung 130 axial oder halbaxial ausgeführt sein. Im Beispiel ist eine halbaxiale Ausführung gezeigt. Der Vorteil ist, dass auf diese Weise ein Anschlag entsteht und die Feder 156 eine definierte Schließkraft auf das Schließelement 110 und die zweite Dichtungsanordnung 130 ausübt. Sollten beide Dichtungsanordnungen 120, 130 als radiale Dichtungen ausgeführt sein, ist ein vorzugweise metallischer Anschlag in der Verstelleinrichtung oder noch besser im Bereich des Schließelements 110 vorzusehen. In letzterem Fall werden lange Toleranzketten vermieden, die durch produktionsbedingte Schwankungen in den Bauteilmaßen zu einer unerwünschten Schwankung der Vorspannung in einer hergestellten Serie von Ventilvorrichtungen führen.

Die aseptischen Eigenschaften der Ventilvorrichtung können weiter gesteigert werden, indem ein Balg 172 die Ventilstange 170 umgebend angeordnet ist, dessen eines Ende mit dem Schließelement 110 und dessen anderes Ende mittelbar oder unmittelbar mit der Verstelleinrichtung verbunden ist.

In Fig. 2 ist der Bereich des Schließelements im Ausschnitt dargestellt.

Am Schließelement sind Aufnahmen 122 und 132 ausgeformt, in denen Dichtungsringe 124 und 134 aufgenommen sind. Die jeweilige Aufnahme 122, 132 und der jeweilige Dichtungsring 124,134 bilden zusammen eine der Dichtungsanordnungen 120, 130. Die erste Dichtungsanordnung 120 ist als Radialdichtung ausgeführt. Von dem Gehäuse 100, dem Schließelement 110 und den Dichtungsanordnungen 120, 130 ist in der Schließstellung des Schließelements 110 die Kammer 140 begrenzt. Die Schließstellung ist in Fig. 2a dargestellt. Beide Dichtungsanordnungen 120, 130 stehen in dichtendem Kontakt mit den zugeordneten Sitzen 126, 136.

In die Kammer 140 mündet eine Fluidzuleitung 148. Ein Fluidventilschließglied 146 ist vorgesehen, welches in eine Schließstellung verbringbar ist, in der Fluidströmung in der Fluidzuleitung 148 unterbrochen ist. In dieser Stellung ist daher die Versorgung der Kammer 140 mit bakterizidem Fluid unterbrochen.

In Fig. 2a befinden sich das Fluidventilschließglied 146 in seiner Offenstellung und das Schließelement 110 in seiner Schließstellung. Die Kammer 140 ist dann mit dem Reservoir 142 verbunden und bakterizides Fluid befindet sich unter Ausbildung einer Keimbarriere in der Kammer 140.

In Fig. 2b befindet sich das Schließelement 110 in Teilhubstellung. Da die erste Dichtungsanordnung 120 als Radialdichtung ausgebildet ist, steht sie in dichtendem Kontakt mit dem ersten Sitz 126, während zwischen zweitem Dichtungsring 134 und dem zweiten Sitz 136 der zweiten Dichtungsanordnung 130 ein Spalt ausgebildet ist. Das Fluidventilschließglied 146 befindet sich in Schließstellung, so dass in der dargestellten Schaltstellung der Anordnung das bakterizide Fluid aus der Kammer 140 abfließt.

In Fig. 2c befinden sich das Schließelement 110 in Offenstellung und das Fluidventilschließglied 146 in Schließstellung. Das Reservoir 142 ist somit abgesperrt und es fließt kein bakterizides Fluid in den Innenraum der Ventilvorrichtung, in dem sich das Schließelement 110 befindet. In dieser Stellung kann der Behälter 200 mit Füllgut befüllt oder es kann Füllgut aus dem Behälter 200 entnommen werden.

Das Verfahren zum Betreiben der Ventilvorrichtung und der Anordnung geht aus von den Schritten, in der Offenstellung des Schließelements 110 den Behälter 200 mit Füllgut zu befüllen, das Schließelement 110 danach in Schließstellung zu bringen und danach die Kammer 140 mit bakterizidem Fluid zu füllen.

Für diese Schritte geschieht im gezeigten Beispiel das nachfolgend Beschriebene.

Zunächst wird das Fluidventilschließglied 146 in Schließstellung gebracht und so das Reservoir 142 abgetrennt. Die Hauptdruckmittelversorgung 154 stellt unter Druck stehendes Pneumatikfluid bereit, so dass das Schließelement 110 in Offenstellung gebracht wird. Nun ist eine Fluidverbindung zwischen erstem und zweitem Anschluss 102,106 hergestellt und Füllgut kann in den Behälter 100 eingefüllt werden.

Anschließend wird die Hauptverstelleinrichtung 150 entlüftet und das Schließelement 110 durch die Kraft der Feder 156 in Schließstellung gebracht. Hierdurch wird die Kammer 140 durch die Dichtungsanordnungen 120,130, das Schließelement 110 und das Gehäuse 100 vollständig umschlossen. Durch Öffnen des Fluidventilschließgliedes 146 wird die Kammer 140 mit bakterizidem Fluid befüllt.

In einer Weiterbildung wird das Schließelement 110 kurz in eine Teilhubstellung verbracht, wobei das Fluidventilschließglied 146 in Offenstellung verbleibt. Hierdurch können Luftblasen aus dem bakteriziden Fluid entweichen, ohne dass die Fluidfüllung der Kammer 140 verloren geht.

In einer anderen Weiterbildung wird vor Entnahme des Füllgutes zunächst das Fluidventilschließglied 146 geschlossen und so das Reservoir 142 von der Kammer 140 getrennt. Anschließend wird das Schließelement 110 in die Teilhubstellung gebracht, so dass der Inhalt der Kammer 140 aus dieser ausströmt und durch den zweiten Anschluss 106 entfernt werden kann. Dies geschieht vorteilhaft in einem Sterilisationsprozess, in welchem ein im Gehäuse befindlicher und von der Ventilstange 170 durchsetzter Raum 108 von Keimen befreit wird.

Eine andere Weiterbildung sieht vor, dass nach Befüllen des Behälters mit Füllgut und vor Füllen der Kammer 140 mit bakterizidem Fluid das Schließelement 110 in Teilhubstellung gebracht wird und in dieser Stellung die Kammer 140 und Raum 108 gereinigt und sterilisiert werden.

Das bakterizide Fluid weist eine chemische Zusammensetzung auf, die die Bildung von Keimen soweit unterdrückt, dass Qualitätskritierien erfüllt und Grenzwerte, soweit solche bestehen, nach dem Transport unterschritten bleiben.

Das bakterizide Fluid kann eine Konzentration an Alkohol von wenigstens 20 Volumenprozenten besitzen. Insbesondere kann es eine Flüssigkeit mit einer Alkoholkonzentration von wenigstens 20 Volumenprozenten sein.

### BEZUGSZEICHENLISTE

- 10: Schwerkraftrichtung
- 100: Gehäuse
- 102: erster Anschluss
- 104: Ventilflansch
- 106: zweiter Anschluss
- 108: Raum
- 110: Schließelement
- 120: erste Dichtungsanordnung
- 122: Aufnahme
- 124: erster Dichtungsring
- 126: erster Sitz
- 130: zweite Dichtungsanordnung
- 132: Aufnahme
- 134: zweiter Dichtungsring
- 136: zweiter Sitz
- 140: Kammer
- 142: Reservoir
- 144: Fluidventil
- 146: Fluidventilschließglied
- 148: Fluidzuleitung
- 150: Hauptverstelleinrichtung
- 152: Hauptkolben
- 154: Hauptdruckmittelversorgung
- 156: Feder
- 158: Hauptbetätigungsvolumen
- 160: Nebenverstelleinrichtung
- 162: Nebenkolben
- 164: Nebendruckmittelversorgung
- 166: Anschlag
- 168: Nebenbetätigungsvolumen
- 170: Ventilstange
- 172: Balg
- 180: Ablauf
- 182: Verschließmittel
- 200: Behälter
- 202: Stutzen
- 204: behälterseitiger Flansch
- 206: Innenraum des Behälters
- 208: Flanschdichtung

## Patentansprüche

1. Ventilvorrichtung mit einem Gehäuse (100), welches einen ersten Anschluss (102), der mit einem transportierbaren Behälter (200) verbindbar ist, und einen zweiten Anschluss (106) aufweist, mit einem im Gehäuse vorgesehenen Schließelement (110), weiches in eine Offenstellung verbringbar ist, in der eine Fluidverbindung zwischen erstem und zweitem Anschluss (102, 106) hergestellt ist, und welches in eine Schließstellung verbringbar ist, in der erster und zweiter Anschluss (102, 106) fluiddicht voneinander getrennt sind, mit einer ersten (120) und einer zweiten (130) Dichtungsanordnung zwischen Schließelement und Gehäuse, wobei die erste und die zweite Dichtungsanordnung (120, 130) voneinander beabstandet sind und wobei jede Dichtungsanordnung (120, 130) mit einem korrespondierenden Sitz (126, 136) zusammenwirkt, wobei eine Kammer (140) vorgesehen ist, welche in der Schließstellung von den Dichtungsanordnungen (120, 130), dem Schließelement (110) und dem Gehäuse (100) begrenzt ist, **dadurch gekennzeichnet, dass** ein mit der Kammer verbindbares Reservoir (142) zur Aufnahme eines bakteriziden Fluids vorgesehen ist, dass die Ventilvorrichtung in Schließstellung des Schließelements (11) transportierbar ist und dass die Kammer (140) und das Reservoir (142) zur Ausbildung und Aufrechterhaltung über eine gesamte Transportdauer hinweg einer in der Schließstellung mit dem bakteriziden Fluid geschaffenen Keimbarriere angepasst sind und dass die erste Dichtungsanordnung (120) dem ersten Anschluss (102) zugeordnet und als Radialdichtung ausgeführt ist, und dass eine Verstelleinrichtung vorgesehen und derart ausgestaltet ist, dass sie eine Verstellung des Schließelements (110) zwischen Offenstellung und Schließstellung und eine Teilhubstellung bewirkt, wobei in der Teilhubstellung die erste Dichtungsanordnung (120) in dichtendem Kontakt mit dem Sitz (126) verbleibt während die zweite Dichtungsanordnung (130) den ihr zugeordneten Sitz (136) nicht berührt und dass die zweite Dichtungsanordnung (130) axial oder halbaxial ausgeführt ist.

2. Ventilvorrichtung nach Anspruch 1, **dadurch gekennzeichnet, dass** erste und zweite Dichtungsanordnung (120, 130) jeweils eine am Schließelement (110) angeordnete Aufnahme (122, 132) und jeweils einen darin befindlichen Dichtungsring (124, 134) besitzen.

3. Ventilvorrichtung nach Anspruch 2, **dadurch gekennzeichnet, dass** die Verstelleinrichtung umfasst:
- eine Hauptverstelleinrichtung (150), die das Schließelement (110) zwischen Offenstellung und Schließstellung bewegt und
- eine Nebenverstelleinrichtung (160), die das Schließelement (110) in Teilhubstellung bringt.

4. Ventilvorrichtung nach einem der vorhergehenden Ansprüche, **dadurch gekennzeichnet, dass** die zweite Dichtungsanordnung (130) axial oder halbaxial ausgeführt ist.

5. Ventilvorrichtung nach einem der Ansprüche 3 oder 4, **dadurch gekennzeichnet, dass** ein Balg (172) vorgesehen ist, der eine mit der Verstelleinrichtung und dem Schließelement (110) verbundene Ventilstange (170) umgibt.

6. Ventilvorrichtung nach einem der vorhergehenden Ansprüche, **dadurch gekennzeichnet, dass** ein Fluidventil (144) zwischen dem Reservoir (142) und der Kammer (140) angeordnet ist.

7. Anordnung mit einem Behälter (200) und einer Behälteröffnung, **dadurch gekennzeichnet, dass** die Behälteröffnung mit dem ersten Anschluss (102) einer Ventilvorrichtung nach einem der vorgehenden Ansprüche verbunden ist.

8. Anordnung nach Anspruch 7, **dadurch gekennzeichnet, dass** zwischen Behälteröffnung und dem ersten Anschluss (102) eine aseptische Schraubflanschverbindung (104, 204) angeordnet ist.

9. Anordnung nach Anspruch 7 oder 8, **dadurch gekennzeichnet, dass** der Behälter (200) in einem Tankcontainer, der Teil der Anordnung ist, angeordnet ist.

10. Anordnung nach einem der Ansprüche 7 bis 9, **dadurch gekennzeichnet, dass** das Reservoir (142) an der auf die Schwerkraftrichtung (10) bezogen höchsten Stelle der Kammer (140) in diese mündet.

11. Verfahren zum Betreiben einer Anordnung mit einem transportierbaren Behälter (200) und einem an einer Behälteröffnung angebrachten Ventilvorrichtung nach einem der Ansprüche 1 bis 6, **dadurch gekennzeichnet, dass** in der Offenstellung der Ventilvorrichtung zu transportierendes Füllgut in den Behälter (200) gefüllt, das Schließelement (110) anschließend in die Schließstellung gebracht und danach die Kammer (140) mit bakterizidem Fluid gefüllt wird und mit bakterizidem Fluid eine Keimbarriere über eine gesamte Transportdauer eines anschließenden Transports hinweg ausgebildet wird,

12. Verfahren nach Anspruch 11, **dadurch gekennzeichnet, dass** in der Offenstellung der Ventilvorrichtung ein zu transportierendes Füllgut in den Behälter (200) gefüllt wird, danach die Kammer (140) mit bakterizidem Fluid gefüllt wird, und das Füllen der Kammer (140) mit bakterizidem Fluid umfasst, dass das Schließelement (110) derart in die Teilhubstellung gebracht wird, dass Luftblasen aus dem bakteriziden Fluid entfernt werden und mit bakterizidem Fluid eine Keimbarriere über eine gesamte Transportdauer eines anschließenden Transports hinweg ausgebildet wird.

13. Verfahren nach einem der Ansprüche 11 oder 12, **dadurch gekennzeichnet, dass** zur Entnahme des Füllgutes das Schließelement (110) zunächst in die Teilhubstellung des Schließelements (110) gebracht und anschließend in der Teilhubstellung des Schließelements (110) ein Sterilisationsprozess durchgeführt wird, in welchem das bakterizide Fluid entfernt wird.

## Claims

1. A valve device with a housing (100) which has a first connection (102) which can be connected to a transportable container (200), and a second connection (106) with a closing element (110) which is provided in the housing and which can be brought into an open position in which a fluid connection between the first and second connection (102, 106) is produced, and which can be brought into a closed position in which the first and second connection (102, 106) are separated from each other in fluid-tight manner, with a first (120) and a second (130) sealing arrangement between the closing element and the housing, wherein the first and the second sealing arrangement (120, 130) are spaced apart from each other and wherein each sealing arrangement (120, 130) cooperates with a corresponding seat (126, 136), wherein a chamber (140) is provided which in the closed position is delimited by the sealing arrangements (120, 130), the closing element (110) and the housing (100), **characterised in that** a reservoir (142), which can be connected to the chamber, for receiving a bactericidal fluid is provided, **in that** the valve device can be transported in the closed position of the closing element (11), and **in that** the chamber (140) and the reservoir (142) are adapted for configuring and maintaining over an entire transport duration a germ barrier produced in the closed position with the bactericidal fluid, and **in that** the first sealing arrangement (120) is associated with the first connection (102) and is embodied as a radial seal, and **in that** an adjustment means is provided and configured such that it effects adjustment of the closing element (110) between the open position and closed position and brings about a partial stroke position, wherein in the partial stroke position the first sealing arrangement (120) remains in sealing contact with the seat (126) while the second sealing arrangement (130) does not contact the seat (136) associated with it, and **in that** the second sealing arrangement (130) is embodied axially or semiaxially.

2. A valve device according to Claim 1, **characterised in that** the first and second sealing arrangement (120, 130) possess in each case a receptacle (122, 132) arranged on the closing element (110) and in each case a sealing ring (124, 134) located therein.

3. A valve device according to Claim 2, **characterised in that** the adjustment means comprises:
- a main adjustment means (150) which moves the closing element (110) between the open position and the closed position, and
- a secondary adjustment means (160) which brings the closing element (110) into the partial stroke position.

4. A valve device according to one of the preceding claims, **characterised in that** the second sealing arrangement (130) is embodied axially or semiaxially.

5. A valve device according to one of Claims 3 or 4, **characterised in that** a bellows (172) is provided which surrounds a valve stem (170) connected to the adjustment means and the closing element (110).

6. A valve device according to one of the preceding claims, **characterised in that** a fluid valve (144) is arranged between the reservoir (142) and the chamber (140).

7. An arrangement with a container (200) and a container opening, **characterised in that** the container opening is connected to the first connection (102) of a valve device according to one of the preceding claims.

8. An arrangement according to Claim 7, **characterised in that** an aseptic screw flange connection (104, 204) is arranged between the container opening and the first connection (102).

9. An arrangement according to Claim 7 or 8, **characterised in that** the container (200) is arranged in a part of the arrangement.

10. An arrangement according to one of Claims 7 to 9, **characterised in that** the reservoir (142) opens into the chamber (140) at the highest point thereof, relative to the direction of gravity (10).

11. A method for operating an arrangement with a transportable container (200) and a valve device, attached to a container opening, according to one of Claims 1 to 6, **characterised in that** in the open position of the valve device filling material which is to be transported is poured into the container (200), the closing element (110) is then brought into the closed position and thereafter the chamber (140) is filled with bactericidal fluid and with bactericidal fluid a germ barrier is formed over an entire transport duration of a subsequent transport.

12. A method according to Claim 11, **characterised in that** in the open position of the valve device a filling material which is to be transported is poured into the container (200), thereafter the chamber (140) is filled with bactericidal fluid, and the filling of the chamber (140) with bactericidal fluid comprises the closing element (110) being brought into the partial stroke position in such a manner that air bubbles are removed from the bactericidal fluid and with bactericidal fluid a germ barrier is formed over an entire transport duration of a subsequent transport.

13. A method according to one of Claims 11 or 12, **characterised in that** to remove the filling material the closing element (110) is first brought into the partial stroke position of the closing element (110) and then in the partial stroke position of the closing element (110) a sterilisation process is carried out in which the bactericidal fluid is removed.

## Revendications

1. Dispositif à vanne avec un boîtier (100), qui comprend un premier raccord (102), qui peut être relié avec un récipient transportable (200), et un deuxième raccord (106) avec un élément de fermeture (110) prévu dans le boîtier, qui peut être mis dans une position ouverte, dans laquelle une liaison fluidique est établie dans un premier et un deuxième raccord (102, 106) et qui peut être mis dans une position fermée, dans laquelle, le premier et le deuxième raccords (102, 106) sont séparés l'un de l'autre de manière étanche aux fluides, avec un premier (120) et un deuxième (130) dispositif d'étanchéité entre l'élément de fermeture et le boîtier, le premier et le deuxième dispositifs d'étanchéité (120, 130) étant distants l'un de l'autre et chaque dispositif d'étanchéité (120, 130) interagissant dans un siège (126, 136) correspondant, une chambre (140) étant prévue, qui est limitée, dans la position fermée, par les dispositifs d'étanchéité (120, 130), l'élément de fermeture (110) et le boîtier (100), **caractérisé en ce qu'**un réservoir (142), pouvant être relié avec la chambre, est prévu pour le logement d'un fluide bactéricide, **en ce que** le dispositif à vanne est transportable dans la position fermée de l'élément de fermeture (11) et **en ce que** la chambre (140) et le réservoir (142) sont conçus pour la génération et le maintien, sur l'ensemble d'un temps de transport, d'une barrière anti-germes créée dans la position fermée avec le fluide bactéricide et **en ce que** le premier dispositif d'étanchéité (120) correspond au premier raccord (102) et est conçu comme un joint d'étanchéité radial et **en ce qu'**un dispositif de déplacement est prévu et conçu de façon à ce qu'il provoque un déplacement de l'élément de fermeture (110) entre la position ouverte et la position fermée et permet une position de course partielle, moyennant quoi, dans la position de course partielle, le premier dispositif d'étanchéité (120) reste en contact étanche avec le siège (126) tandis que le deuxième dispositif d'étanchéité (130) ne touche pas le siège (136) correspondant et **en ce que** le deuxième dispositif d'étanchéité (130) est réalisée de manière axiale ou semi-axiale.

2. Dispositif à vanne selon la revendication 1, **caractérisé en ce que** le premier et le deuxième dispositifs d'étanchéité (120, 130) possèdent chacun un logement (122, 132) disposé sur l'élément de fermeture (110) et chacun une bague d'étanchéité (124, 134) se trouvant à l'intérieur de celui-ci.

3. Dispositif à vanne selon la revendication 2, **caractérisé en ce que** le dispositif de déplacement comprend :
- un dispositif de déplacement principal (150), qui déplace l'élément de fermeture (110) entre la position ouverte et la position fermée et
- un dispositif de déplacement secondaire (160) qui met l'élément de fermeture (110) dans une position de course partielle.

4. Dispositif à vanne selon l'une des revendications précédentes, **caractérisé en ce que** le deuxième dispositif d'étanchéité (130) est réalisé de manière axiale ou semi-axiale.

5. Dispositif à vanne selon l'une des revendications 3 ou 4, **caractérisé en ce qu'**un soufflet (172) est prévu, qui entoure une tige de vanne (170) reliée avec le dispositif de déplacement et l'élément de fermeture (110).

6. Dispositif à vanne selon l'une des revendications précédentes, **caractérisé en ce qu'**une vanne de fluide (144), est disposée entre le réservoir (142) et la chambre (140).

7. Disposition avec un récipient (200) et une ouverture de récipient, **caractérisée en ce que** l'ouverture de récipient est reliée avec le premier raccord (102) d'un dispositif à vanne selon l'une des revendications précédentes.

8. Disposition selon la revendication 7, **caractérisée en ce que**, entre l'ouverture de récipient et le premier raccord (102) se trouve une liaison à bride vissée aseptique (104, 204).

9. Disposition selon la revendication 7 ou 8, **caractérisée en ce que** le récipient (200) est disposé dans une partie de la disposition.

10. Dispositif à vanne selon l'une des revendications 7 à 9, **caractérisé en ce que** le réservoir (142) débouche dans la chambre (140) au niveau de l'endroit le plus haut de celle-ci par rapport à la direction de la force de gravité (10).

11. Procédé d'exploitation d'une disposition avec un récipient transportable (200) et un dispositif à vanne monté sur une ouverture du récipient selon l'une des revendications 1 à 6, **caractérisé en ce que**, dans la position ouverte du dispositif à vanne, le produit à transporter est introduit dans le récipient (200), l'élément de fermeture (110) est ensuite mis dans la position fermée puis la chambre (140) est remplie d'un fluide bactéricide et, avec le fluide bactéricide, une barrière anti-germes est formée pendant l'ensemble d'un temps de transport ultérieur.

12. Procédé selon la revendication 11, **caractérisé en ce que**, dans la position d'ouverture du dispositif à vanne, un produit à transporter est introduit dans le récipient (200), puis la chambre (140) est remplie d'un fluide bactéricide et le remplissage de la chambre (140) avec un fluide bactéricide comprend le fait que l'élément de fermeture (110) est mis dans la position de course partielle, que les bulles d'air sont éliminées du fluide bactéricide et, avec le fluide bactéricide, une barrière anti-germes est formée pendant l'ensemble d'un temps de transport ultérieur.

13. Procédé selon l'une des revendications 11 ou 12, **caractérisé en ce que**, pour le prélèvement du produit, l'élément de fermeture (110) est d'abord mis dans la position de course partielle de l'élément de fermeture (110) puis, dans la position de course partielle de l'élément de fermeture (110), un processus de stérilisation est effectué, dans lequel le fluide bactéricide est éliminé.
